# EUROPEAN PATENT SPECIFICATION

(11) **EP 4 140 710 B1**
(45) Date of publication and mention of the grant of the patent: **12.08.2026**
(21) Application number: 22202660.1
(22) Date of filing: 29.07.2019
(51) Int. Cl.: B29C 70/16, B29C 70/50, B32B 5/26, B32B 27/12, B29C 70/20, B32B 5/02, B29B 11/16, B29C 70/12, B29C 70/08, B29C 70/46, B29B 15/14, B29B 15/12

(54) **REINFORCED FIBER TAPE MATERIAL AND PRODUCTION METHOD THEREFOR, FIBER REINFORCED RESIN**
VERSTÄRKTES FASERBANDMATERIAL UND HERSTELLUNGSVERFAHREN DAFÜR, FASERVERSTÄRKTES HARZ
MATÉRIAU DE BANDE DE FIBRES RENFORCÉES ET SON PROCÉDÉ DE PRODUCTION, RÉSINE RENFORCÉE PAR DES FIBRES

(30) Priority: 09.08.2018 JP 2018150759; 09.08.2018 JP 2018150760
(43) Date of publication of application: 01.03.2023
(62) Document number(s) of the earlier application(s) in accordance with Art. 76 EPC: 19846296.2 / 3 835 037
(73) Proprietor: Toray Industries, Inc., Tokyo 103-8666 (JP)
(72) Inventor: KANDA, Mamoru, Nagoya-shi, Aichi 455-8502 (JP); SATO, Masayuki, Nagoya-shi, Aichi 455-8502 (JP)
(74) Representative: Hoefer & Partner Patentanwälte mbB

(56) References cited:
- WO-A1-2010/087811
- US-A1- 2015 375 461
- US-A1- 2016 052 235

## Description

### Technical Field of the Invention

The present invention relates to a reinforcing fiber tape material mainly used in a fiber placement method.

### Background Art of the Invention

A fiber reinforced plastic (FRP) composed of reinforcing fibers and a resin is used for aviation, space, automobile applications, etc. from the properties of light weight and high strength. As a molding method that achieves both FRP productivity and high strength, for example, a molding method for impregnating and curing a resin in a reinforcing fiber layered body later can be exemplified, such as a resin transfer molding (RTM) method or a VaRTM (Vacuum assisted Resin Transfer Molding) method or the like. In the RTM method, a reinforcing fiber layered body composed of a reinforcing fiber base material comprising a group of dry reinforcing fiber strands which are not pre-impregnated with a matrix resin is placed and shaped in a mold, and by injecting a liquid matrix resin with a low viscosity, the matrix resin is impregnated and cured later to mold an FRP. In particular, in case where a high productivity is required, a technology for shortening the molding time of a fiber reinforced plastic by making the cavity in the mold thicker than the thickness of a final molded product when injecting the resin and impregnating the resin at a high speed by closing the mold, or the like, is used. Further, in recent years, a wet press molding method is also used in which a liquid resin is applied to a reinforcing fiber layered body and then the mold is closed to impregnate the resin.

A reinforcing fiber layered body, which is molded into a fiber reinforced resin molded body by impregnating and curing a resin, has been conventionally made by forming and fixing a raw material into a three-dimensional shape, the raw material being prepared by cutting out to a desired shape from a reinforcing fiber base material having a constant-width (that is, substantially rectangular) fabric form composed of a group of dry reinforcing fiber strands which are not impregnated with a resin, such as a woven fabric or a non-crimp fabric (NCF). However, when a desired shape is cut out from a fabric having a constant width in such a manner, a large amount of scrap material remaining after the cutting out is created. Namely, there is a problem that the amount of waste of reinforcing fibers increases, and the production cost increases in the conventional method of producing a reinforcing fiber base material having a fabric form and a constant width in advance.

In response to such problems, a fiber placement method, in which reinforcing fiber strands are arranged only in necessary places so as to have a desired shape matching a product shape, is paid attention to. According to the fiber placement method, since the required amount of reinforcing fibers is placed at the required location, the amount of discarded reinforcing fibers can be significantly reduced. Furthermore, since the reinforced fiber base material produced by the fiber placement method has less crimps of the reinforcing fiber strands and is excellent in straightness as compared with the conventional woven fabric or NCF, the FRP obtained by injecting and curing a resin has a high mechanical strength.

As a conventional technology relating to a reinforcing fiber tape material used in the fiber placement method, for example, in Patent document 1 and Patent document 2, a method of manufacturing a tape material by sticking the same thermoplastic resin non-woven fabrics on both surfaces of the reinforcing fiber strand only by heating and cooling without stitching or knitting is shown.

Further, as another conventional technology regarding a reinforcing fiber tape material used in the fiber placement method, for example, a technology of a tape, in which a plurality of reinforcing fiber strands are arranged in parallel with an interval and they are bound and integrated by bonding both surfaces thereof with a thermoplastic non-woven fabric, is proposed (Patent document 3). Furthermore, in Patent document 4, a technology of a tape, in which a non-woven fabric made of a thermoplastic resin is contacted with a reinforcing fiber sheet aligned with reinforcing fiber strands in one direction and they are integrated by pressurizing in a temperature range equal to or higher than the glass transition temperature and lower than the melting point, is proposed.

In these prior arts of Patent documents 3 and 4, a reinforcing fiber tape material is realized in which a plurality of reinforcing fiber strands are bound and integrated by being adhered with a thermoplastic non-woven fabric, thereby maintaining the form of the tape and securing an impregnation flow path by using the thermoplastic non-woven fabric itself as a flow path. Patent documents 5 and 6 disclose reinforcing fiber tape materials according to preamble of claim 1.

### Prior art documents

### Patent documents

Patent document 1: Japanese Patent No. 5854504
Patent document 2: Japanese Patent No. 5584224
Patent document 3: Japanese Patent No. 5830095
Patent document 4: Japanese Patent No. 5851714
Patent document 5: US 2016/052235 A1
Patent document 6: WO 2010/087811 A1

### Summary of the Invention

### Problems to be solved by the Invention

As described above, the reinforcing fiber base material produced by the fiber placement method has less crimps of the reinforcing fiber strands and is excellent in straightness as compared with the conventional woven fabric and NCF, so the FRP obtained by injecting and curing a resin has a high mechanical strength. However, the reinforcing fiber base material produced by the fiber placement method has few resin flow paths during resin injection due to the straightness of the reinforcing fiber strands, and the impregnation property becomes extremely poor as compared with the conventional woven fabric and NCF. If the impregnation property is deteriorated, the time required for resin injection in injection molding becomes long, the production cycle becomes long, and the merit of high productivity of injection molding is lost. Further, in injection molding, it is necessary to complete the resin injection before the resin to be injected becomes highly viscous (that is, within the pot life), but if the impregnation property of the reinforcing fiber base material is poor, not only the resin or process that can be used is restricted, but also defects so called non-impregnated·dry spots in which the resin is not impregnated in the base material are likely to occur, which may cause reduction of mechanical properties such as rigidity and strength of the product.

In case where the fiber placement method, especially a device technology for automatically arranging the tape material is used, the reinforcing fiber tape material is drawn out from a bobbin reel or the like, passed through a guide roller in a thread path, heated by an IR (infrared) heater or the like at a position close to a mold, and placed on the mold while receiving pressure from the placement roller. Further, because when it is passed through the guide roller, it is pressed in the surface direction, and when it is placed, it receives heat and pressing pressure onto the mold, the original width of the tape material may change and expand due to these external forces. If the gap between the reinforcing fiber strands is filled due to the change in width, the resin flow path is blocked, and it becomes difficult for the resin to flow at a high speed in the reinforcing fiber base material during injection molding. In addition, in a tape material in which a plurality of reinforcing fiber strands are aligned with each other while providing a gap therebetween and integrated with a thermoplastic resin non-woven fabric or the like, not only the gap between the tapes but also the width of the constituent reinforcing fiber strands changes, and a similar problem occurs in the gaps provided in the tape in advance. Therefore, for the reinforcing fiber tape material to be placed, it is required to be a material which is excellent in dimensional stability and can secure a resin flow path of the reinforcing fiber base material.

In response to such a problem, in Patent document 1, a material and the production method thereof are shown wherein, after the thermoplastic resin non-woven fabrics arranged on both surfaces of the reinforcing fiber strands are stuck in a state of intentionally protruding from the reinforcing fiber strands, only the non-woven fabric at an end portion is treated, thereby preventing the reinforcing fibers from fraying from the end portion of the tape, and as a result, the standard deviation of the strand width constituting the tape becomes 0.25 mm or less. As a method of sticking and fixing the non-woven fabrics on both surfaces to the reinforcing fibers, a method of softening and fixing the non-woven fabric itself and a method of fixing by a resin adhesive arranged between the reinforcing fiber strands and the non-woven fabric are shown. Although the invention of Patent document 1 realizes a high strand width accuracy, because the non-woven fabrics arranged on both surfaces are essentially the same and the amount of the adhesive component fixing the non-woven fabrics is small, when trying to fix the tape material along a mold having a three-dimensional shape (for example, a vertical plane), it is necessary to newly apply a resin material and fix it between the tape material and the mold, or between the tape material already placed and the tape material to be newly placed (a tape material for the next layer), or to heat the non-woven fabric constituting the tape material to a high temperature to sufficiently soften it and stick it. However, when the tape material is heated, the non-woven fabric on the surface of the tape is press-crushed to form a film on the reinforcing fiber strands, or melts and impregnates into the reinforcing fiber strands, or the like, so that the gap between the reinforcing fiber strands cannot be maintained.

Here, the flow of the resin in the thickness direction will be explained. In case where the gaps between the reinforcing fiber strands adjacent to each other in the in-plane direction continuously overlap in the thickness direction, because the gaps become through holes in the thickness direction, it can be easily assumed that the resin easily flows in the thickness direction. However, in case where there is substantially no gap between reinforcing fiber strands adjacent in the in-plane direction, or in case where the tape width is wide and the probability of existence of this through hole is low in the entire base material, by making a condition where the resin flows not only in the thickness direction but also in the in-plane direction by utilizing the gaps between layers and in the layers, it becomes possible that the gaps between the reinforcing fiber strands in the upper layer and the gaps between the reinforcing fiber strands in the lower layer, the upper layer and the lower layer being adjacent to each other in the thickness direction, form continuous flow paths. By forming such continuous resin flow paths, the resin can easily flow in the thickness direction as well.

However, as described above, in the invention of Patent document 1, the gaps between the reinforcing fiber strands in the thickness direction may be filled during the placement process, the resin flow path is reduced, and as a result, there is a problem that the resin injection time into the layered body becomes long.

In Patent document 2, a tape material improved with resin flowability in the thickness direction is shown by inserting a perforation device such as a needle into the tape material obtained and providing through holes penetrating the tape material to the tape material in advance. However, if the previously provided through holes are also heated in order to fix the interlayers and the non-woven fabric material on the surface of the tape material is molten, the provided through holes may not be retained, and in such a case, as a result, there is a problem that the resin injection time into the layered body becomes long.

Further, in the above-described method of the Patent document 3, when a plurality of reinforcing fiber strands are bound and integrated with the thermoplastic non-woven fabric by adhesion, because a part of the flow path is filled with the molten resin when the thermoplastic non-woven fabric is molten, the impregnation property is deteriorated as compared with the state where the thermoplastic non-woven fabric is not molten. Moreover, since the non-woven fabric having a high melting point is molten and impregnated inside the tape, the tape is hard, and a good formability cannot be obtained when the reinforcing fiber layered body is placed and shaped in the mold in a later process.

Furthermore, in the above-described method of Patent document 4, since the pressure is applied in a temperature range equal to or higher than the glass transition temperature and lower than the melting point, a part of the flow paths are filled when the thermoplastic non-woven fabric is softened and adhered to the reinforcing fiber strands by being pressed. Since the softened resin fills the portion, and therefore, the impregnation property is reduced as compared with a state where the thermoplastic non-woven fabric is not softened.

Accordingly, paying attention to the above-described problems in the prior art, an object of the present invention is to provide a reinforcing fiber tape material capable of being easily fixed and placed in a tool (mold), suppressing the change in the width of the reinforcing fiber strand, shortening the resin flow time, speeding up the entire molding cycle, and suppressing the occurrence of non-impregnated portions in the product, and a method for producing the same.

Another object of the present invention is to provide a reinforcing fiber tape material having good formability and good resin impregnation property, and a reinforcing fiber layered body and a fiber reinforced resin molded body using the same.

### Means for solving the Problems

To achieve the above objects, the present invention employs the following constitutions.
(1) A reinforcing fiber tape material according to claim 1.
(8) The reinforcing fiber tape material is preferably a reinforcing fibre tape material, wherein the third resin material is in a form of a non-woven fabric and the form of the non-woven fabric is maintained.
(9) The reinforcing fiber tape material is preferably a reinforcing fibre tape material, wherein the fourth resin material is in a form of particles.
(10) The reinforcing fiber tape material is preferably a reinforcing fibre tape material, wherein thicknesses T1 (µm) and T3 (µm) at both ends in a width direction of a cross section of the reinforcing fiber strand are both within a range of 50 to 200% with respect to a thickness T2 (µm) at a central portion of the reinforcing fiber strand.
(11) The reinforcing fiber tape material is preferably a reinforcing fibre tape material, wherein a number of filaments N [unit: K] and a width W [mm] of the reinforcing fiber strand satisfy 4.8 < N/W < 12.
(12) The reinforcing fiber tape material is preferably a reinforcing fibre tape material, wherein a plurality of the reinforcing fiber strands are aligned in parallel in one direction.
(13) The reinforcing fiber tape material according to any one of (6) to (12), wherein a gap is provided between adjacent reinforcing fiber strands and is formed in parallel with a longitudinal direction of the reinforcing fiber strands.

### Effect according to the Invention

According to the present invention, by using the reinforcing fiber tape material according to the present invention, particularly when manufacturing a sheet base material for RTM or a preform by the fiber placement method, fixing and placement to a tool (mold) is facilitated, and the width change of the reinforcing fiber strand in the placement process is suppressed, and as a result, an effect can be obtained wherein the resin flow time in the resin injection process can be shortened. By this, not only the speed of the entire molding cycle can be increased, but also the easy resin flow makes it possible to suppress the occurrence of non-impregnation in the product, and an effect of stabilizing the quality can also be obtained.

Further, according to the reinforcing fiber tape material according to the present invention, a reinforcing fiber tape material having good formability and good resin impregnation property in the molding in the subsequent process, and the layered sheet base material and molded article thereof can be obtained.

### Brief explanation of the drawings

[Fig. 1] Fig. 1 is a schematic sectional view showing an embodiment of a reinforcing fiber tape material according to a first embodiment in the present invention.
[Fig. 2] Fig. 2 is a schematic perspective view of the reinforcing fiber tape material shown in Fig. 1.
[Fig. 3] Fig. 3 is a schematic perspective view showing an example of a case where the reinforcing fiber tape material according to the first embodiment is formed by a plurality of reinforcing fiber strands.
[Fig. 4] Fig. 4 is a schematic perspective view showing an embodiment of a reinforcing fiber tape material according to a second embodiment in the present invention.
[Fig. 5] Fig. 5 is an explanation diagram of a reinforcing fiber strand forming the reinforcing fiber tape material according to the second embodiment in the present invention.
[Fig. 6] Fig. 6 is a schematic perspective view showing an example of a case where a non-woven fabric is adhered via a fourth resin material to a plurality of reinforcing fiber strands forming the reinforcing fiber tape material according to the second embodiment in the present invention.
[Fig. 7] Fig. 7 is a schematic diagram showing an example of layering of the reinforcing fiber tape material according to the first embodiment in the present invention.
[Fig. 8] Fig. 8 is a schematic diagram showing an example of layering of the reinforcing fiber tape material according to the second embodiment in the present invention.
[Fig. 9] Fig. 9 is a schematic diagram showing an example of layering of a case where reinforcing fiber tape materials according to the first and second embodiments in the present invention coexist.
[Fig. 10] Fig. 10 is a schematic diagram showing an embodiment of a method for producing a reinforcing fiber tape material according to the present invention.

### Embodiments for carrying out the Invention

Hereinafter, the present invention will be explained in detail together with embodiments.

The reinforcing fiber tape material according to the present invention is a reinforcing fiber tape material having a strand aggregate provided with one or a plurality of reinforcing fiber strands, used for resin injection molding, characterized in that the tape material is formed by being restrained and integrated with reinforcing fibers forming the reinforcing fiber strand or/and the plurality of reinforcing fiber strands with each other by a first or fourth resin material arranged on at least one of surfaces of the strand aggregate and a second or third resin material arranged on one of the surfaces which is different in softening point from the first or fourth resin material, and the first or fourth resin material and the second or third resin material have matrix resin permeability. In this reinforcing fiber tape material according to the present invention, typically, the following first and second embodiments can be employed.

### [First embodiment of reinforcing fiber tape material]

A reinforcing fiber tape material having a strand aggregate provided with one or a plurality of reinforcing fiber strands, used for resin injection molding, characterized in that the tape material is formed by being restrained and integrated with reinforcing fibers forming the reinforcing fiber strand or/and the plurality of reinforcing fiber strands with each other by a first resin material arranged only on one of surfaces of the strand aggregate and a second resin material arranged on the other surface which is different in softening point from the first resin material, and the first resin material and the second resin material have matrix resin permeability.

### [Second embodiment of reinforcing fiber tape material]

A reinforcing fiber tape material having a strand aggregate provided with one or a plurality of reinforcing fiber strands, used for resin injection molding, characterized in that a heat-meltable fourth resin material having a softening point of 40°C or higher and 200°C or lower is provided at a state of being solidified after being softened on both surfaces of the strand aggregate composed of reinforcing fiber strands each in which reinforcing fibers are aligned in parallel in one direction, a third resin material having a softening point higher than that of the fourth resin material is adhered to one surface of the strand aggregate composed of the reinforcing fiber strands via the fourth resin material, reinforcing fibers forming the reinforcing fiber strand or/and the plurality of reinforcing fiber strands are restrained and integrated with each other by the third and fourth resin materials, and the third resin material and the fourth resin material have matrix resin permeability.

First, matters common to the above-described first embodiment and the second embodiment of the reinforcing fiber tape material will be explained.

The reinforcing fibers used in the present invention are not particularly restricted, and for example, carbon fibes, glass fibers, aramid fibers, alumina fibers, silicon carbide fibers, boron fibers, metal fibers, natural fibers, mineral fibers and the like can be used. One type or two or more types thereof may be used in combination. Among them, carbon fibers such as polyacrylonitrile (PAN)-based, pitch-based and rayon-based carbon fibers are preferably used from the viewpoint of high specific strength and specific rigidity of the molded body and weight reduction. Further, glass fibers can be preferably used from the viewpoint of enhancing the economic efficiency of the obtained molded article. Moreover, aramid fibers can be preferably used from the viewpoint of enhancing the impact absorption and the formability of the obtained molded article. Furthermore, from the viewpoint of increasing the conductivity of the obtained molded body, reinforcing fibers coated with a metal such as nickel, copper or ytterbium can also be used.

**In** the reinforcing fiber strand used in the present invention, for example, an organic fiber, an organic compound or an inorganic compound may be mixed with reinforcing fibers, or a sizing agent may be adhered thereto. The reinforcing fiber tape material in the present invention may be the reinforcing fiber strand itself or may be composed of a plurality of reinforcing fiber strands.

However, fibers made of a thermoplastic resin having the same softening point (for example, glass transition temperature or melting point) as the resin material arranged on the surface, and reinforcing fiber strands combining the thermoplastic resin fibers and other reinforcing fibers, should be avoided because the desired effect of the present invention cannot be obtained.

The number of single fibers of the reinforcing fibers constituting the reinforcing fiber strand is preferably 3,000 to 60,000, and more preferably 10,000 to 60,000. **In** case where the number of single fibers of the reinforcing fibers is less than 10,000, the areal weight of the reinforcing fibers of the reinforcing fiber tape material becomes low, and when the reinforcing fiber tape material is placed sequentially so as to form a desired shape met with a product shape by using the fiber placement method, a larger number of reinforcing fiber tape materials must be placed, and it takes time to place the reinforcing fiber tape materials, which reduces the productivity. When the number of single fibers of the reinforcing fibers is less than 3,000, the productivity is further reduced. In case where the number of single fibers of the reinforcing fibers is more than 60,000, the areal weight of the reinforcing fibers of the reinforcing fiber tape material becomes high, and when the reinforcing fiber tape material is placed sequentially so as to form a desired shape met with a product shape by using the fiber placement method, the areal weight of the reinforcing fibers per one layer becomes too high, which narrows the range of the orientation design.

The first or fourth resin material and the second or third resin material may have heat-meltability, and as the material, thermoplastic resins such as polyamide resin, polyester resin, polyethylene terephthalate resin, polyvinyl formal resin, polyether sulfone resin, phenoxy resin and polycarbonate resin, and as others, phenol-based resin, phenoxy resin, epoxy resin, and further, thermoplastic elastomers such as polystyrene-based resin, polyolefin-based resin, polyurethane-based resin, polyester-based resin, polyamide-based resin, polybutadiene-based resin, polyisoprene-based resin, fluorine-based resin and acrylonitrile-based resin, copolymers and modified product thereof, and resins in which two or more kinds of these resins are blended, etc. can be used.

These heat-meltable resin materials can also be used, other than for an adhesive function that fixes the interlayers when made into a reinforcing fiber layered body, for the purpose of securing a matrix resin flow path at the time of impregnation and for the purpose of strengthening the interlayers by using a resin of a material exhibiting a high toughness. Further, in order to impart functionality such as conductivity and flame retardancy, a resin mixed with fine particles of an inorganic material or the like can also be used. These resin materials can also be used for the purpose of securing a matrix resin flow path at the time of impregnation and for the purpose of strengthening the interlayers by using a resin of a material exhibiting a high toughness.

Since the reinforcing fiber tape material of the present invention is molded as a composite material by a resin injection molding method, the first or fourth resin material and the second or third resin material arranged on the surface of the reinforcing fiber strand must have a matrix resin permeability. In other words, having resin permeability means that it is sufficient to have a gap for the resin to be a matrix to flow, and forms of a woven fabric, knitting, non-woven fabric or the like using short fibers or/and long fibers made of these resin materials, etc. can be used.

On the other hand, forms in which the resin to be a matrix cannot be substantially transmitted, for example, a film form having no through holes, or a form in which fibers of a material made into a non-woven fabric or a woven fabric are fused to each other without gaps, cannot be used.

Next, the first embodiment of the reinforcing fiber tape material will be explained.

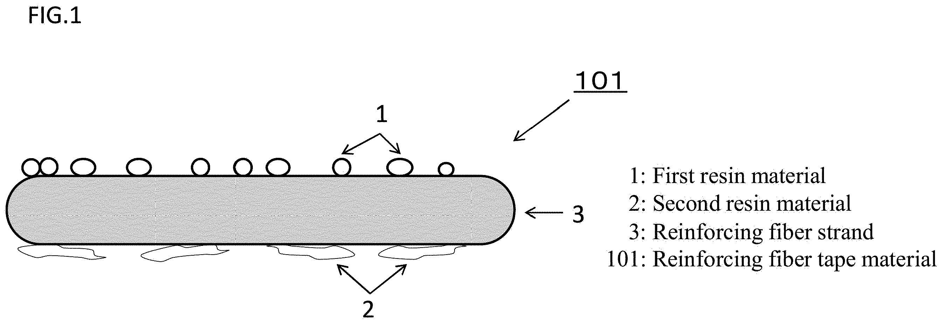

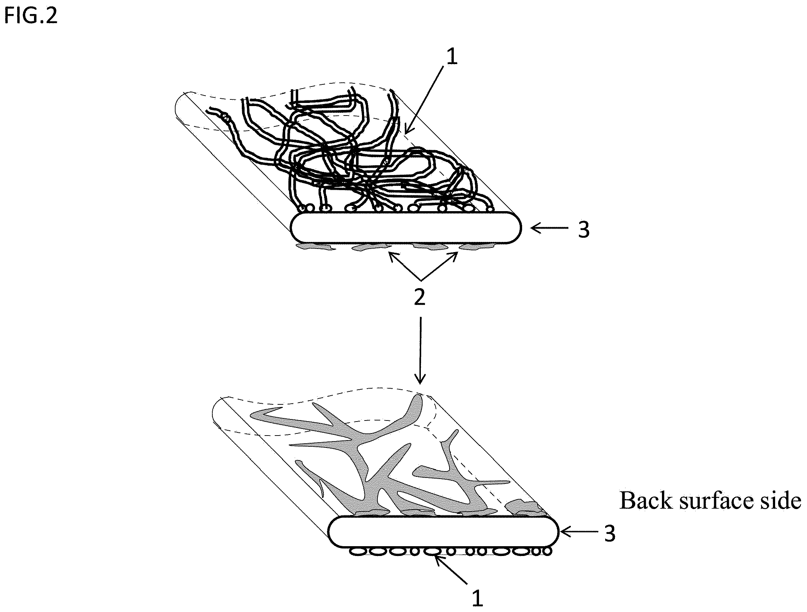

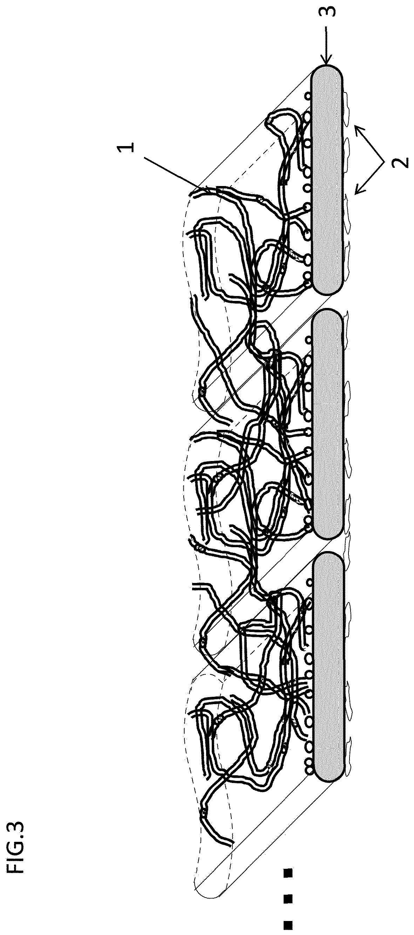

A sectional view of one embodiment of the reinforcing fiber tape material according to the first embodiment is shown in Fig. 1, and a perspective view thereof is shown in Fig. 2. Further, a perspective view of an embodiment of the reinforcing fiber tape material according to the first embodiment in case where a plurality of reinforcing fiber strands are provided is shown in Fig. 3. In the embodiment shown in Figs. 1 and 2, the first resin material 1 having matrix resin permeability is arranged only on one of the surfaces of the strand aggregate composed of one reinforcing fiber strand 3, the second resin material 2 having matrix resin permeability and having a softening point different from that of the first resin material 1 is arranged on the other surface of the strand aggregate, and a reinforcing fiber tape material 101, in which the reinforcing fibers constituting the reinforcing fiber strand 3 are restrained and integrated with each other by the first resin material 1 and the second resin material 2, is formed. The first resin material 1 is given, for example, in the form of particles, and the second resin material 2 is given, for example, in the form of a non-woven fabric. In the embodiment shown in Fig. 3, the first resin material 1 is arranged only on one of the surfaces of a strand aggregate composed of a plurality of reinforcing fiber strands 3 arranged in parallel with each other with a gap, the second resin material 2 is arranged on the other surface, and a reinforcing fiber tape material, in which the reinforcing fiber strands 3 are restrained and integrated with each other by the first resin material 1 and the second resin material 2, is formed.

In such a reinforcing fiber tape material according to the first embodiment, the softening point of the second resin material is preferably 40°C or higher and 150°C or lower. Further, it is preferably 40°C or higher and 130°C or lower, and further preferably 40°C or higher and 100°C or lower.

Further, it is preferred that the relationship between the softening point M1 (°C) of the first resin material and the softening point M2 (°C) of the second resin material is represented by the following equation. $M 1 \geq M 2 + 10 \left(°C\right)$

In the present specification, the "softening point" indicates a temperature at which the resin material softens/melts when the temperature of the resin material reaches that temperature or higher. Concretely, in case where the resin material is a crystalline polymer, it indicates a melting point, and in case where the resin material is an amorphous polymer, it indicates a glass transition point.

Therefore, the relationship between the softening points of the first and second resin materials can be understood as a relationship between the glass transition temperatures or the melting points, and can be understood as a relationship between the glass transition temperatures (Tg1) or the melting point (Tm1) of the first resin material and the glass transition temperature (Tg2) or the melting point (Tm2) of the second resin material. In this case, it is preferably within the range of the following equation. $Tg 1 \geq Tg 2 + 10 \left(°C\right) or Tm 1 \geq Tm 2 + 10 \left(°C\right)$ It is more preferably, $Tg 1 \geq Tg 2 + 80 \left(°C\right) or Tm 1 \geq Tm 2 + 80 \left(°C\right) ,$ and further preferably in the following range. $Tg 1 \geq Tg 2 + 100 \left(°C\right) or Tm 1 \geq Tm 2 + 100 \left(°C\right) .$

The softening point, glass transition temperature, and melting point referred to here can be obtained by measuring the resin material to be used using a DSC device (differential scanning calorimeter), and simply, it is possible to refer to a value described in a technical information issued by a resin material manufacturer.

In the present invention, by the softening point of the second resin material, the handleability of the final reinforcing fiber tape material changes. When the softening point is 40°C or higher, because the second resin material does not melt even in a room temperature environment and does not cause a tackiness (adhesiveness), it can be stored without being frozen or refrigerated, and on the other hand, when the softening point is 150°C or lower, the time required for heating is reduced when the reinforcing fiber tape material is fixed to a mold by the fiber placement method, and it becomes possible to arrange the material quickly.

By the condition where the softening point of the first resin material is higher than the softening point of the second resin material by 10°C or higher, preferably 80°C or higher, when fixing to the mold by the fiber placement method is performed, since the first resin material can maintain its form surely without melting even at a temperature at which the second resin material exhibits a tackiness, it becomes possible to maintain a layer made of the first resin material at an interlayer position.

In the present invention, a formation can be employed wherein the first and second resin materials are restrained and integrated with the reinforcing fibers or/and the plurality of reinforcing fiber strands with each other at a form of a non-woven fabric made of a fibrous first or second resin material.

The non-woven fabric form can be selected from a mat form in which fibers are randomly entangled, a form in which fibers arranged in a plurality of directions are melt-fixed to each other or integrated with an adhesive, etc. Further, the form may be isotropic and have a little variation in density, or may have a peculiar arrangement pattern (for example, lattice shape, spiral shape, wavy shape, etc.) so as to have an anisotropy in order to impart functionality. In case where a form having such a pattern is selected, the drape property (formability) of a final tape material can be changed depending upon the shape to be arranged. Depending upon the shape to be arranged, it becomes possible to change the rate of the resin fixed continuously in the fiber direction of the reinforcing fiber strand and the resin fixed continuously in the width direction, and in particular, by decreasing the rate in the fiber direction and increasing the rate in the width direction, it is possible to obtain a reinforcing fiber tape material which is easily bent in the direction perpendicular to the fiber direction while maintaining the adhesion between the reinforcing fibers.

On the other hand, in case where a form in which the fiber direction is not biased in a specific direction is selected, such as a mat form in which short fibers or/and long fibers are randomly entangled, it is possible to arrange the first and second resin materials on the surface of the reinforcing fiber strands at an almost isotropic state and a uniform density, and for example, in case where a resin is selected expecting a function for suppressing cracks that occur between layers when an impact in the out-of-plane direction is applied, conductivity, flame retardancy, etc., it can be said that it is effective to select a form having an isotropic property.

Next, the second embodiment of the reinforcing fiber tape material will be explained.

The reinforcing fiber tape material according to the second embodiment is a reinforcing fiber tape material wherein a heat-meltable fourth resin material having a softening point of 40°C or higher and 200°C or lower is provided at a state of being solidified after being softened on both surfaces of the strand aggregate composed of reinforcing fiber strands, and a third resin material having a softening point higher than that of the fourth resin material is adhered to one surface of the reinforcing fiber strands via the fourth resin material.

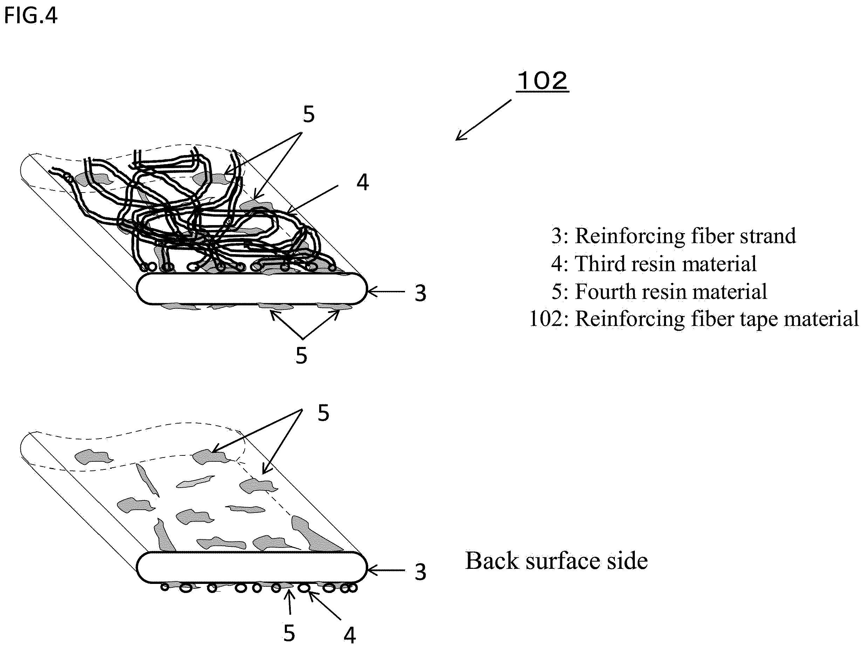

Fig. 4 shows an embodiment of the reinforcing fiber tape material according to the second embodiment, and shows a configuration example in case of one reinforcing fiber strand.

The reinforcing fiber tape material 102 exists in a form in which the fourth resin material 5 is solidified after softening on both surfaces of the reinforcing fiber strand 3, and is formed by a state where the third resin material 4 is present in an unsoftened state on one surface of the reinforcing fiber strand 3 via the fourth resin material 5. As to the configuration in which the plurality of reinforcing fiber strands 3 are arranged in parallel with each other with a gap, the same configuration as that of the reinforcing fiber tape material according to the first embodiment shown in Fig. 3 can be employed.

Further, in the reinforcing fiber tape material according to the second embodiment, it is important that the heat-meltable fourth resin material has a softening point M1 (°C) of 40°C or higher and 200°C or lower. By using such a fourth resin material, the filaments forming the reinforcing fiber strands are fixed to each other when the viscosity is lowered by heating and then cooled to return to a room temperature, and it becomes securer to keep a certain form.

Where, in the present specification, the "state of being solidified after softening" indicates a state in which the viscosity is reduced by heating and thereafter, which is returned to a room temperature by cooling, etc.

Further, in the reinforcing fiber tape material according to the second embodiment, it is preferred that the amount to be provided of the fourth resin material present between layers and on the surface layer of the reinforcing fiber tape material is in a range of 0.1 to 20 parts by mass relative to 100 parts by mass of the reinforcing fiber tape material. In case where the amount to be provided of the fourth resin material is less than 0.1 parts by mass, it becomes difficult to keep the form of the reinforcing fiber tape material by adhering the third resin material via the fourth resin material. On the other hand, in case where the amount to be provided of the fourth resin material is more than 20 parts by mass, because the restraint by the fourth resin material is strong, when the reinforcing fiber tape material is deformed into a three-dimensional shape, there is a possibility that it becomes difficult to follow the shape of the mold. Not only the viscosity of the matrix resin increases, the flowability decreases, and the productivity decreases, but also it takes a long time for the matrix resin to flow, and the matrix resin viscosity required for injection molding of the matrix resin increases, non-impregnation occurs, and the mechanical properties of the molded article deteriorate significantly. In particular, when the amount to be provided of the fourth resin material is in a range of 2 to 15 parts by mass, because the shape followability of the tape to the mold is relatively good, and the impregnation property at the time of resin injection is not injured, it is a more preferable embodiment.

In the reinforcing fiber tape material according to the second embodiment, it is important that the softening point M4 [°C] of the fourth resin material and the softening point M3 [°C] of the third resin material satisfy the following equation. $M 3 > M 4 + 10$

M3 is preferably larger than M4 + 10, more preferably larger than M4 + 50, and further preferably larger than M4 + 90. In case where M3 is M4 + 10 or less, when the third resin material is adhered via the fourth resin material, the third resin material is partially softened due to temperature unevenness during heating or the like, and as a result, there is a possibility that, in a resin injection process which is a subsequent process, the in-plane impregnation property of the reinforcing fiber tape material reduces.

Where, the shape of the fourth resin material is not particularly limited as long as it has matrix resin permeability, it may be a particle shape, a non-woven fabric shape, a film, a mesh, an emulsion, a coating, or an auxiliary yarn wound around the reinforcing fiber strand, and it is preferably a particle shape from the viewpoint of easiness of spraying onto both surfaces.

The shape of the third resin material is not particularly limited as long as it has matrix resin permeability, it may be a particle shape, a non-woven fabric shape, a film, a mesh, an emulsion, a coating, or an auxiliary yarn wound around the reinforcing fiber strand, and it is preferably a non-woven fabric shape because it is excellent in in-plane impregnation property in the resin injection process which is a subsequent process, and further, it is preferred that the fiber form of the non-woven fabric is held without being softened or molten.

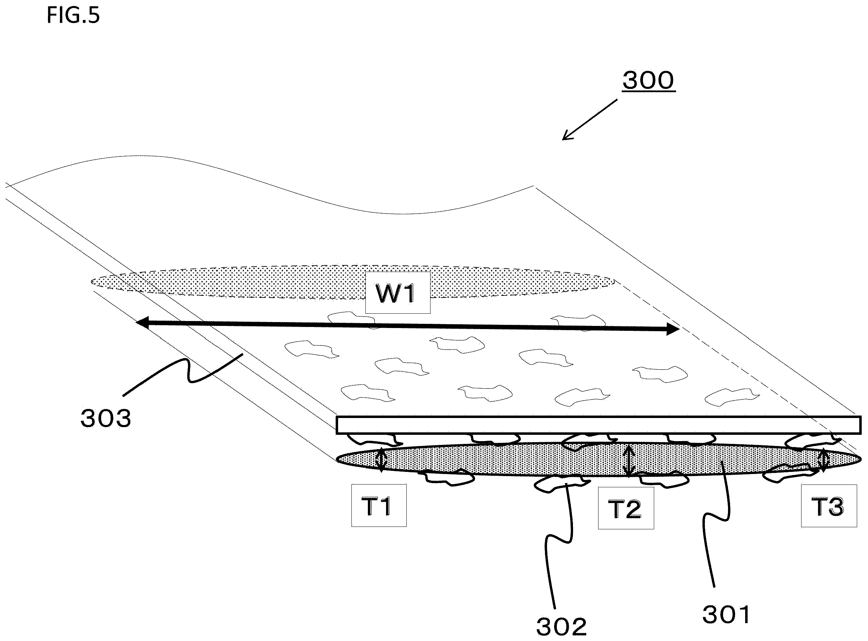

Fig. 5 shows an explanation diagram of the thickness and width of a reinforcing fiber strand forming the reinforcing fiber tape material 300 according to the second embodiment.

In the reinforcing fiber tape material 300 according to the second embodiment, the reinforcing fiber filaments are bundled by a bundling material such as a sizing agent to form a reinforcing fiber strand 301, but this reinforcing fiber strand 301 is not completely fixed in shape by the bundling material, and the form may change when a tension is released.

Here, with respect to the reinforcing fiber strand 301, it is important that the thicknesses T1 (µm) and T3 (µm) at both end portions in the width direction of the cross section are both within the range of 50 to 200% to the thickness T2 (µm) at the central portion of the reinforcing fiber strand 301. The upper limit is more preferably less than 150%. Where, in Fig. 5, 302 indicates a fourth resin material, and 303 indicates a third resin material.

When T1 (µm) and T3 (µm) are 200% or less with respect to T2 (µm), it becomes possible to suppress the width change of the reinforcing fiber strands arranged by the fiber placement method. This is because in case where the end portion of the reinforcing fiber strand is extremely thicker than the central portion, since the reinforcing fiber strand is pressed onto the mold by the fiber placement method, the end portion is widened by being pressed, but in case where T1 (µm) and T3 (µm) are 200% or less with respect to T2 (µm), the width of the end portion is suppressed from being widened. By using a tape made of such reinforcing fiber strands, it becomes possible to secure a gap between the strands serving as the resin impregnation flow path, and it is possible to improve the productivity at the time of resin impregnation. The closer T1 (µm) and T3 (µm) are to 100% relative to T2 (µm), the more remarkable the effect becomes.

On the other hand, in case where the thickness of the end portion of the reinforcing fiber strand is smaller than that of the central portion of the reinforcing fiber strand, when the reinforcing fiber tape material composed of the reinforcing fiber strand is placed on the mold by the fiber placement method, it is widened as a whole in the width direction by the condition where the central portion of the fiber strand is pressed, but in case where T1 (µm) and T3 (µm) are 50% or more relative to T2 (µm), since the reinforcing fiber strand is pressed over the entire width direction to disperse the load, the widening is suppressed. Therefore, it is important that the lower limit is greater than 50%, and more preferably 75% or more.

Here, the thicknesses T1 (µm) and T3 (µm) of the end portions of the reinforcing fiber strand are defined as follows. When a direction perpendicular to the traveling direction of the reinforcing fiber strand on the same plane as the traveling direction of the reinforcing fiber strand is referred to as the strand width direction, each of T1 and T3 is defined as a thickness of a portion 1 mm inside from each end in the strand width direction. Further, the thickness T2 of the strand central portion indicate a thickness of the central portion in the strand width direction, that is, the portion having the same distance from the left and right end portions.

Further, with respect to the width W [mm] and the number of filaments N [unit: K] of the reinforcing fiber strand 301, it is important that they satisfy 4.8 < N/W < 12. The lower limit is preferably greater than 5.8, more preferably greater than 7.8.

When the N/W is larger than 4.8, if the number of filaments of the reinforcing fiber strand is constant, the strand width can be made smaller. In this case, if the reinforcing fiber strands are arranged in one direction by the fiber placement method, it becomes possible to place them while finely adjusting the gap between the reinforcing fiber strands adjacent to each other. As a result, a gap between the reinforcing fiber strands can be secured as a flow path of the matrix resin, and the flowability of the matrix resin at the time of molding can be facilitated.

On the other hand, if the strand width of the reinforcing fiber strand is constant, the number of filaments N can be increased. In this case, the areal weight per one layer of the base material in which the reinforcing fiber strands are arranged in one direction by the fiber placement method can be increased, the time required for layering the base material can be shortened, and the productivity can be improved.

The larger the N/W value is, the more remarkable the effect becomes. However, if the N/W value becomes too large, if the number of filaments of the reinforcing fiber strands is constant, the strand width becomes too small, which causes a problem that the placement time of the reinforcing fiber strands greatly increases, or if the strand width of the fiber strand is constant, the number of filaments N increases too much, which makes it difficult to control the thickness of the base material and may make it difficult to impregnate the matrix resin into the reinforcing fiber strand with. From such a point of view, it is important that the upper limit of N/W is 12, preferably less than 10, and more preferably less than 8.

Here, the respective thicknesses T1 (µm), T2 (µm) and T3 (µm) of the reinforcing fiber strand 301 are measured as follows. The form of the reinforcing fiber tape material is preserved by providing, impregnating and curing a room temperature curable-type resin in a state of being drawn out at a constant tension in a range of 200 to 3,000 cN. By embedding the obtained sample and observing the cross section thereof, the thicknesses of the reinforcing fiber strand at the end portions and the central portion thereof can be measured.

Further, the width of the reinforcing fiber strand 301 is measured as follows. Using an ultra-high-speed, high-precision dimensional measuring instrument (for example, LS-9500 supplied by KEYENCE CORPORATION), at a condition where the reinforcing fiber strand 301 is unwound by a length of 10 m at a constant tension in a range of 200 to 3,000 cN and a constant speed of 2.5 m/min, the strand width is measured. The strand width indicates an outer dimension (maximum distance from one end to the other end) of the reinforcing fiber strand 301 in a direction perpendicular to the traveling direction on the same plane as the traveling direction of the reinforcing fiber strand 301. The strand width was measured every second, and the average value of the obtained data was taken as the width of the reinforcing fiber strand.

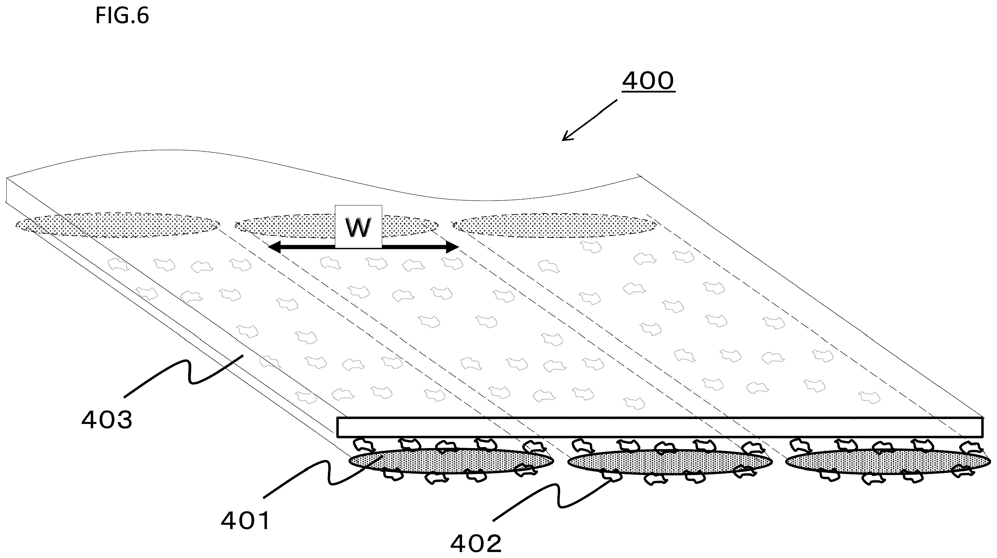

Fig. 6 shows another embodiment of the reinforcing fiber tape material according to the second embodiment.

The reinforcing fiber tape material 400 is formed in such a manner that the first resin 402 exists at a state of being solidified after softening on both surfaces of a plurality of reinforcing fiber strands 401 arranged in one direction, and the second resin 403 exists on one surface of the reinforcing fiber strands 401 at an unsoftened state via the first resin 402.

In the reinforcing fiber tape material 400, it is preferred that a plurality of reinforcing fiber strands 401 are restrained and integrated with each other by the third resin material 403. Further, it is preferred that a gap exists between the plurality of reinforcing fiber strands 401 (width: W) forming the reinforcing fiber tape material 400.

By the condition where the reinforcing fiber tape material 400 contains a plurality of reinforcing fiber strands 401 and they are integrated with each other, the number of reinforcing fiber filaments and the weight per unit length of the reinforcing fiber tape material is increased, the time required for aligning the reinforcing fiber strands 401 to form a base material the reinforcing fibers by the fiber placement method can be shortened, and the productivity can be improved. Further, by the condition where there is a gap between a plurality of reinforcing fiber strands 401 forming the reinforcing fiber tape material, in case where they are arranged in one direction to form a base material by the fiber placement method, it is possible to secure a flow path of the matrix resin. Further, even in case where the reinforcing fiber tape materials are arranged in one direction without gaps by the fiber placement method to form a base material, because gaps are provided between the plurality of reinforcing fiber strands 401 fixed in the reinforcing fiber tape material, the flowability of the matrix resin at the time of molding can be ensured.

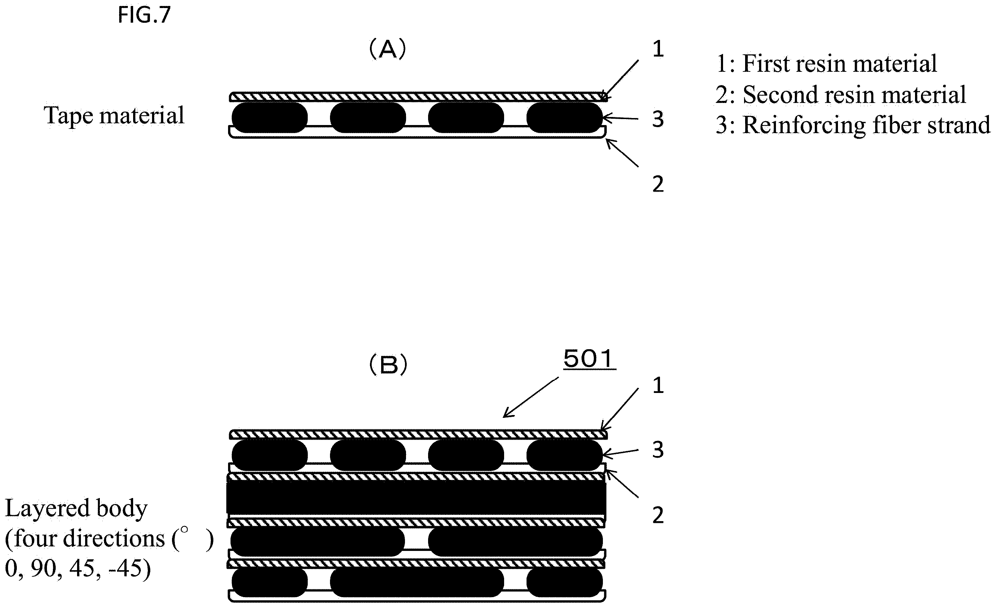

Next, an example of the reinforcing fiber layered body using the reinforcing fiber tape material will be explained with reference to Figs. 7 to 9. **In** the present invention, the fiber placement method is used to form a base material in which reinforcing fiber tape materials are arranged in parallel, and by overlapping the respective base materials without interweaving them and adhering the layers of the base materials to each other, a reinforcing fiber layered body can be manufactured.

As one embodiment of the reinforcing fiber layered body using the reinforcing fiber tape material according to the first embodiment, a reinforcing fiber layered body 501 can be formed by layering the reinforcing fiber tape materials, for example, each of which is shown in Fig. 7(A) and each in which the first resin material 1 is arranged on one surface of the reinforcing fiber strand 3 and the second resin material 2 is arranged on the other surface, for example, as shown in Fig. 7(B), in four directions as arrangement angles (reference direction 0°, and 90°, 45°, -45° with respect to the reference direction 0°, totally four directions).

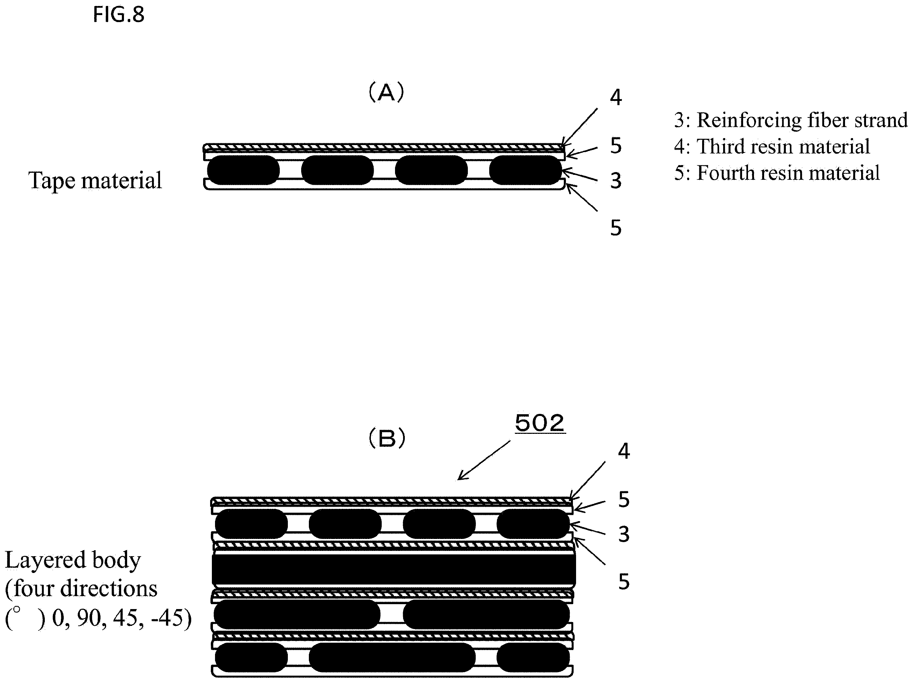

Further, as one embodiment of the reinforcing fiber layered body using the reinforcing fiber tape material according to the second embodiment, a reinforcing fiber layered body 502 can be formed by layering the reinforcing fiber tape materials, for example, each of which is shown in Fig. 8(A) and each in which the fourth resin material 5 is arranged on both surfaces of the reinforcing fiber strand 3 and the third resin material 4 is arranged on one surface thereof, for example, as shown in Fig. 8(B), in four directions as arrangement angles (reference direction 0°, and 90°, 45°, -45° with respect to the reference direction 0°, totally four directions).

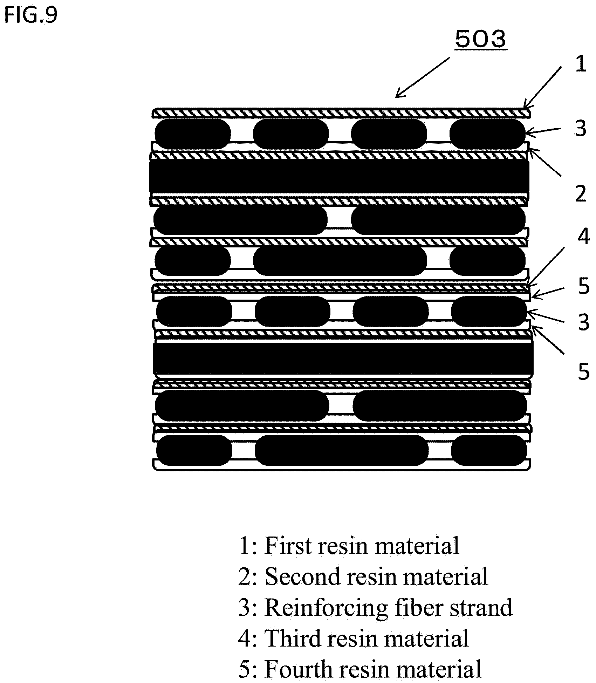

Furthermore, as shown in Fig. 9, it is also possible to form a mixed-type reinforcing fiber layered body 503 in which the reinforcing fiber tape material according to the first embodiment as shown in Fig. 7(A) and the reinforcing fiber tape material according to the second embodiment as shown in Fig. 8(A) are layered in an arbitrary layering form.

By employing any of these configurations shown in Figs. 7 to 9, the reinforcing fiber tape materials forming the reinforcing fiber layered body can be stably bonded to each other via the second resin material or the fourth resin material having a low softening point, and by maintaining the form of the first resin material or the third resin material, which can be adhered and has a high softening point, it is possible to suppress the interlayers of the reinforcing fiber layered body from being crushed, and to suppress the resin flow path during molding from being blocked.

Next, a method for producing the reinforcing fiber tape material of the present invention, in particular, a method for producing the reinforcing fiber tape material according to the first embodiment will be explained.

A production method according to the present invention is a method for producing a reinforcing fiber tape material which has a strand aggregate having one or a plurality of reinforcing fiber strands, in particular, a method for producing a reinforcing fiber tape material according to the first embodiment, the method comprises the following steps:
a) a step of forming a strand aggregate by arranging one or a plurality of reinforcing fiber strands drawn out and adjusted to a predetermined width;
b) a step of supplying and arranging a first resin material to at least one of surfaces of the strand aggregate formed in the step a) and a second resin material on one of the surfaces;
c) a step of heating the reinforcing fiber strand and the arranged first resin material and second resin material and pressurizing the resins relative to the reinforcing fiber strand to fix the first resin material to the reinforcing fiber strand while maintaining a form of the first resin material and to melt the second resin material and impregnate at least a part thereof into the reinforcing fiber strand; and
d) a step of cooling and winding the reinforcing fiber tape material.

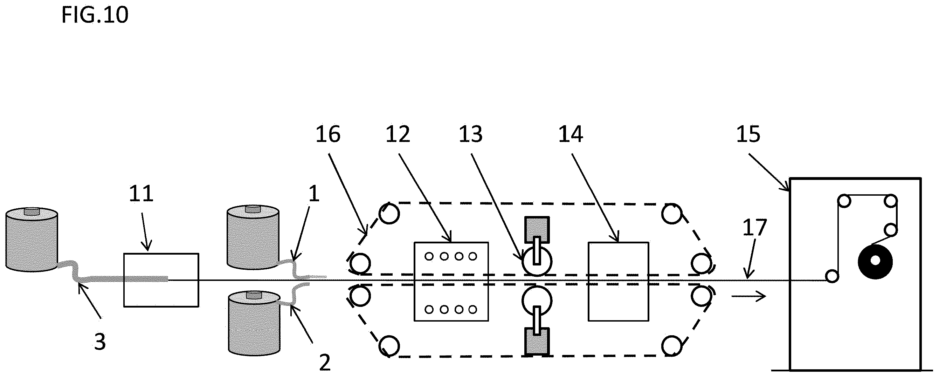

An example of an apparatus for manufacturing a reinforcing fiber tape material used for carrying out the method for producing a reinforcing fiber tape material according to the present invention is shown in Fig. 10. The reinforcing fiber strand 3 is adjusted to a predetermined width by a width adjusting mechanism 11, the first resin material 1 and the second resin material 2 are arranged on each surface thereof, and while the reinforcing fiber strand 3 is fed by circulated belts 16 provided above and below, it is passed through a heating unit (heater) 12, a pressurizing unit (nip rolls) 13, and a cooling unit 14 in this order, a reinforcing fiber tape material 17 is wound up by a winder 15.

As a method of supplying the first and second resin materials to the reinforcing fiber strand, one or combination of a method of supplying a resin material which has been woven, knitted, or formed into a non-woven fabric in advance, a method of cutting and spraying a fibrous resin, a method of blowing powdered resin, a method of applying a slurry resin mixed with a solvent through a roller or a brush and then drying the solvent, and a method of blowing and supplying a molten resin by a melt blow method or the like, can be selected.

By fixing the first resin material to the reinforcing fiber strand while leaving its form, it becomes easy to secure the matrix resin flow path at the time of injection molding. On the other hand, by melting the second resin material and impregnating at least a part thereof into the reinforcing fiber strand, the reinforcing fibers or/and a plurality of reinforcing fiber strands are firmly fixed and integrated with each other with the continuous resin, and even if a pressurizing force in an out-of-plane direction is received in the placement process, the width of the reinforcing fiber strand is hardly changed.

In the above-described step b), the first or/and second resin materials are preferably supplied in the form of a non-woven fabric composed of the preformed fibrous first or/and second resin materials.

By preparing a resin material formed so as to have a desired shape in advance and then arranging it, it becomes easy to manage the quality of the resin material (weight per unit area, density of fibers, arrangement pattern, etc.) to be arranged on the surface of the reinforcing fiber strand. Easy to manage. In addition, the production cost of woven fabrics and knitting is relatively high, and in terms of suppressing the production cost of the reinforcing fiber tape material, the non-woven fabric form is desired.

The first resin material can be supplied in the form of a non-woven fabric made of the first resin material having random fiber directions, while the second resin material can be supplied in the form of a non-woven fabric made of the second resin material having a regular fiber orientation.

The first resin material has a higher glass transition point or melting point than the second resin material, because its form does not substantially change (is not made to be changed) due to heating or pressurization at the time of the placement, it is suitable for material selection focusing on the purpose of ensuring the matrix resin flow path during injection molding, on the purpose of strengthening the interlayers by using a resin of a material exhibiting a high toughness, or on the purpose of imparting functionality such as conductivity and flame retardancy, and further, since it is necessary that the targeted properties are exhibited isotropically and uniformly even in the layered body of the reinforcing fiber tape materials and the molded article obtained by injecting the resin into the layered body, the form, in which the resin fibers forming the non-woven fabric are randomly arranged, is suitable.

On the other hand, the second resin material has a low glass transition point or melting point, and when it is integrated with the reinforcing fiber strand, a part or most of it is impregnated into the reinforcing fiber strand. Therefore, in order to maintain the matrix resin permeability even after melt impregnated into the reinforcing fiber strand, it is preferred to use a form in which regular intervals between the fibers are provided before the arrangement on the reinforcing fiber strands.

### Examples

The reinforcing fiber tape material according to the first embodiment in the present invention will be explained based on Examples.

### <Reinforcing fiber strand>

A carbon fiber bundle "T800SC-24K" supplied by Toray Industries, Inc. was used.

### <Reinforcing fiber tape material>

### (Example 1)

Using the reinforcing fiber tape material manufacturing apparatus, as shown in Fig. 10, with respect to one carbon fiber strand drawn out from the bobbin while adjusting the width to 4.0 mm, a non-woven fabric as the first resin material 1 (polyamide resin, melting point: 190°C) was charged from one surface side, and a non-woven fabric (polyamide resin, melting point: 95°C) as the second resin material 2 was charged from the other surface side, and carbon fibers are charged. While arranging so as to sandwich the carbon fiber bundle, it was passed through the heating unit 12 heated to 180°C and the pressurizing unit 13 (nip rolls, pressing force: 0.1 MPa), then cooled to 40°C or lower and wound to obtain a reinforcing fiber tape material in which the non-woven fabric and the carbon fiber strand were integrated.

When the reinforcing fiber tape material was manually cut out again from the wound bobbin to a length of about 500 mm and stationarily placed on a flat plate to observe the surface and measure the width, the non-woven fabric as the first resin material 1 was fixed to the reinforcing fiber strand at a state where its fiber form was left, and on the other hand, the non-woven fabric as the second resin material 2 was molten and its fiber form did not remain, and it was impregnated into the reinforcing fiber strand. Further, the reinforcing fiber strand maintained the same width as before the non-woven fabric and the like were integrated.

When the tape material was pressed against the flat plate at room temperature using a roller, the change in width was extremely small. When the reinforcing fiber tape material was similarly pressed against the flat plate with the roller while being heated to 80°C, the width of the reinforcing fiber strand almost did not change, and the reinforcing fiber tape material could be stick to the flat plate.

### (Example 2)

Using the reinforcing fiber tape material manufacturing apparatus, the same operation as in Example 1 was carried out other than a condition where six carbon fiber strands drawn out from the bobbins while adjusting the width of each strand to 4.0 mm were drawn out and aligned in parallel with a gap of 0.3 mm, to obtain a reinforced fiber tape material in which a non-woven fabric and a plurality of carbon fiber strands were integrated. After winding, when the surface observation, the width measurement and the test of pressing against the flat plate with the roller at a room temperature and 80°C, results similar to those in Example 1 were obtained.

### (Comparative Example 1)

When the carbon fiber strand was manually cut out from the bobbin to a length of about 500 mm and stationarily placed on a flat plate to measure the width, the width was about 8 mm. When the strand was pressed against the flat plate with a roller at a room temperature, the width was visibly widened to about 10 mm. Further, it was similarly pressed against the flat plate with a roller while being heated to 80°C, but it did not stick to the flat plate.

### (Comparative Example 2)

Using the reinforcing fiber tape material manufacturing apparatus, 6 bundles of carbon fiber strands each drawn out from the bobbin while adjusting the width to 4.0 mm are aligned in parallel with a gap of 0.3 mm, a non-woven fabric as the first resin material 1 was put onto the drawn carbon fiber strand group from one surface side, it was passed through the pressurizing unit (nip rolls, pressing force: 0.1 MPa) heated to 210°C, and then, by cooling and winding, a reinforcing fiber tape material in which the non-woven fabric and a plurality of carbon fiber strands were integrated was obtained.

After winding, when the surface observation, the width measurement and the test of pressing against the flat plate with the roller at a room temperature and 80°C, the non-woven fabric as the first resin material 1 was molten, its fiber form was not left, and it was impregnated into the reinforcing fiber strands. Further, the reinforcing fiber strands maintained the same width as before the non-woven fabric as the first resin material 1 was integrated. When pressed against the flat plate with a roller, it did not stick at both room temperature and 80°C.

### (Comparative Example 3)

Using the reinforcing fiber tape material manufacturing apparatus, 6 bundles of carbon fiber strands each drawn out from the bobbin while adjusting the width to 4.0 mm are aligned in parallel with a gap of 0.3 mm, a non-woven fabric as the first resin material 1 was put onto the drawn carbon fiber strand group from one surface side, it was passed through the pressurizing unit (nip rolls, pressing force: 0.1 MPa) heated to 180°C, and then, by cooling and winding, a reinforcing fiber tape material in which the non-woven fabric and a plurality of carbon fiber strands were integrated was obtained.

When it was tried to manually cut out the reinforcing fiber tape material with a length of about 500 mm from the wound bobbin again, most of the non-woven fabric as the first resin material 1 and the reinforcing fiber strands were not fixed, and when the width was measured at a state being stationarily placed on the flat plate, they were separated from each other and they could not no longer form a tape material integrated.

### (Comparative Example 4)

Using the reinforcing fiber tape material manufacturing apparatus, 6 bundles of carbon fiber strands each drawn out from the bobbin while adjusting the width to 4.0 mm are aligned in parallel with a gap of 0.3 mm, a non-woven fabric as the first resin material 1 was put onto the drawn carbon fiber strand group from both surface sides, it was passed through the pressurizing unit (nip rolls, pressing force: 0.1 MPa) heated to 210°C, and then, by cooling and winding, a reinforcing fiber tape material in which the non-woven fabric and a plurality of carbon fiber strands were integrated was obtained. The result of the width measurement after winding was the same as in Comparative Example 2.

### (Comparative Example 5)

Using the reinforcing fiber tape material manufacturing apparatus, 6 bundles of carbon fiber strands each drawn out from the bobbin while adjusting the width to 4.0 mm are aligned in parallel with a gap of 0.3 mm, a non-woven fabric as the first resin material 1 was put onto the drawn carbon fiber strand group from one surface side and binder particles (epoxy resin, average particle size: 200 µm, melting point: 80°C, not shown) were blown from the other surface side, it was passed through the pressurizing unit (nip rolls, pressing force: 0.1 MPa) heated to 180°C, and then, by cooling and winding, a reinforcing fiber tape material in which the non-woven fabric on one surface side and the binder particles on the other surface side were integrated with a plurality of carbon fiber strands was obtained.

When the reinforcing fiber tape material was manually cut out again from the wound bobbin to a length of about 500 mm and stationarily placed on a flat plate to observe the surface and measure the width, the non-woven fabric as the first resin material 1 was fixed to the reinforcing fiber strand at a state where its fiber form was left, and on the other hand, the binder particles were molten and the particle form did not remain, and they were impregnated into the reinforcing fiber strand. Further, the width of the reinforcing fiber strands was wider than that before the non-woven fabric and the like were integrated, and the gaps provided when aligning the reinforcing fiber strands were filled with the reinforcing fibers.

When the tape material was pressed against the flat plate with a roller at a room temperature, in particular, the outermost reinforcing fiber strand in the width direction was widened up to 6 to 7 mm. Furthermore, when the reinforcing fiber tape material was pressed against the flat plate with a roller while being heated to 80°C, sticking to the flat plate was confirmed, but the change of the width occurred visibly similarly to the state at the room temperature.

### <Sheet material and layered body>

### (Example 1)

A reinforcing fiber tape material was manually cut out again from the wound bobbin to a length of about 200 mm, and this was repeated to temporarily fix them on a flat plate (tool) with a gap of 0.3 mm to be targeted. They were aligned on a film, which was cut out to a size of about 300 mm square and opened with a hole of 100 mm square in the center, and fixed with tape to form one layer of a sheet using a reinforcing fiber tape material of about 200 mm x 200 mm. Thereafter, a second layer was formed above the tape material of the first layer in a direction orthogonal to the fiber direction of the first layer, a third layer was further formed in a direction orthogonal to the fiber direction (in the same direction as the first layer), and these were repeated to manufacture a layered body having 35 layers in total. The obtained layered body was placed on a tool for molding, covered with a bag film, and the whole was heated to 70°C while vacuum suctioning from the bag surface side (inner surface side of the bag film). Thereafter, the resin heated to 70°C was injected from the tool surface side. (Molding was performed by a so-called VaRTM method.) As a result, the resin was completely impregnated in the thickness direction.

### (Example 2)

The reinforcing fiber tape material was manually cut out to a length of about 200 mm from the wound bobbin again, and this was repeated to form a layered body in the same manner as in Example 1, and when molding was performed by the VaRTM method similarly to in Example 1, the resin was completely impregnated in the thickness direction similarly to in Example 1.

### (Comparative Example 1)

Carbon fiber strands drawn from the bobbins were aligned and layered in the same manner as in Example 1, and molding was performed by the VaRTM method. Although the resin reached about the 30th layer from the surface on the injection side, the resin did not reach the surface on the opposite side and was not impregnated. Further, during the operation of aligning the carbon fiber strands, the gaps to be targeted between the fiber bundles could not be maintained, and some places were observed where many gaps were filled or the fiber bundles were overlapped with each other.

### (Comparative Examples 2 to 5)

The reinforcing fiber tape material was manually cut out from the wound bobbin to a length of about 200 mm again, this was repeated to form a layered body in the same manner as in Example 1, and when molding was performed by the VaRTM method, in Comparative Example 2 and Comparative Example 4, the resin reached about the 20th layer, but the resin did not reach the opposite surface and was not impregnated. In Comparative Example 3, when the reinforcing fiber tape material was cut out, the non-woven fabric and the reinforcing fiber could not maintain the integrity, and the layering was given up. In Comparative Example 5, although the resin was completely impregnated in the thickness direction similarly to in Example 1, the impregnation time was 1.5 times longer.

Table 1 summarizes these evaluation results.

**[Table 1]**

| Manufacture of reinforcing fiber tape material and Evaluation results | | | | | | | |
|---|---|---|---|---|---|---|---|
| | Example | | Comparative Example | | | | |
| | 1 | 2 | 1 | 2 | 3 | 4 | 5 |
| Maintenance of areal weight (fiber width) | ○ | ○ | × | ○ | × | ○ | Δ |
| Sticking to tool (80°C) | ○ | ○ | × | × | - | × | ○ |
| Possibility of impregnation at molding | ○ | ○ | Δ | × | - | × | Δ |

| | | | | | | | |
|---|---|---|---|---|---|---|---|
| o : Possible, good Δ : Possible but slightly poor × : Impossible, cannot achieve | | | | | | | |

Next, the reinforcing fiber tape material according to the second embodiment of the present invention will be explained based on Examples.

### (Example 3)

### <Reinforcing fiber strand>

As the reinforcing fiber strand, the reinforcing fiber "Torayca " (registered trademark) T800SC, supplied by Toray Industries, Inc., which has been previously sized, having 24,000 reinforcing fiber filaments (N = 24K) was used.

### <Reinforcing fiber tape material>

Using the reinforcing fiber tape material manufacturing apparatus, a reinforcing fiber strand having a width W'= 8 mm and a number of filaments N [K] = 24 (N/W = 3) was drawn out from the bobbin, and by narrowing the width without slitting while adjusting the thickness, one bundle of carbon fiber strands with a width of W = 4.0 mm (number of filaments N = 24 [K], N/W = 6, thickness of end portion T1 = 332 µm, thickness of center T2 = 293 µm, thickness of the other end portion T3 = 320 µm, thickness ratio between the end portion and the center T1/T2 = 113%, and T3/T2 = 109%) was obtained. Thereafter, heated molten resin particles having a softening point temperature of 80°C (average particle size: 0.2 mm) were sprayed on both surfaces of the reinforcing fiber strand, by melting and cooling, a reinforcing fiber strand having a fixed form was obtained.

After aligning three reinforcing fiber strands in parallel in the width direction so as to provide a gap of 0.2 mm between the adjacent reinforcing fiber strands, a non-woven fabric (material: polyamide) having a softening point temperature of 200°C was arranged on one surface thereof, and by heating them at 110°C to restrain and integrate the three reinforcing fiber strands with each other, a reinforcing fiber tape material was obtained.

### <Layered sheet base material>

Using a fiber placement device (not shown), the reinforcing fiber tape materials were arranged on a table aligning them in one direction so as to provide a gap of 0.2 mm between the respective tapes, the reinforcing fiber tape materials were cut so as to have a square shape of 1000 mm × 1000 mm and the arrangement was repeated to manufacture a base material, and the base materials were layered so that the reinforcing fiber strands forming the respective base materials were layered in directions orthogonal to each other, and a layered sheet base material was manufactured by adhering between the respective layers.

### <Reinforcing fiber layered body>

A plurality of the above-described layered sheet base materials were are layered so that the areal weight of the reinforcement fiber layered body became 2.4 kg/m², after being placed on a C-shaped mold, they were heated in an oven at 80°C for 1 hour at a state being sealed with a bag film and a sealant and at a condition of reducing the pressure to a vacuum state. Then, it was taken out from the oven, the reinforcing fiber layered body mold was cooled to a room temperature and then the pressure was released to obtain a reinforcing fiber layered body. The obtained reinforcing fiber layered body had a good formability without generating wrinkles.

### <Fiber reinforced resin molded body>

A resin distribution medium (aluminum wire mesh) was layered on the obtained reinforced fiber layered body, a cavity was formed by sealing it with a flat mold and a bag material using a sealant, and they were put into an oven at 100°C. After the temperature of the reinforcing fiber layered body reached 100°C, the sealed cavity was reduced in pressure to a vacuum condition, and the matrix resin was injected only by a pressure difference from the atmospheric pressure while maintaining the temperature at 100°C. After the resin was impregnated, the temperature was elevated to 180°C while continuing to reduce the pressure, and it was left for 2 hours as it was to cure it and then demolded to obtain an FRP flat plate. With respect to the obtained FRP flat plate, non-impregnation was not caused and it had a good impregnation property.

### (Example 4)

### <Reinforcing fiber strand>

The same reinforcing fiber strand as in Example 3 was used.

### <Reinforcing fiber tape material>

By spraying, melting and cooling the heat-melted resin particles (average particle size: 0.2 mm) having a softening point temperature of 110°C on both surfaces of the reinforcing fiber strand by the same method as in Example 3, a reinforcing fiber strand fixing its form was obtained. Three reinforcing fiber strands were drawn out in parallel using a non-woven fabric sticking device (not shown) so as to be parallel in the width direction and so as to provide a gap of 0.2 mm between the reinforcing fiber strands, and at a condition where the non-woven fabric (material: polyamide) having a softening point temperature of 180°C was in contact with one surface thereof, by heating them at 110°C to restrain and integrate them with a laminator of the non-woven fabric sticking device, a reinforcing fiber tape material was obtained.

### <Reinforcing fiber layered body>

A plurality of the layered sheet base materials prepared by the same method as in Example 3 were are layered so that the areal weight of the reinforcement fiber layered body became 2.4 kg/m², after being placed on a C-shaped mold, they were heated in an oven at 110°C for 1 hour at a state being sealed with a bag film and a sealant and at a condition of reducing the pressure to a vacuum state. Then, it was taken out from the oven, the reinforcing fiber layered body mold was cooled to a room temperature and then the pressure was released to obtain a reinforcing fiber layered body. The obtained reinforcing fiber layered body had a good formability without generating wrinkles.

### <Fiber reinforced resin molded body>

A resin distribution medium (aluminum wire mesh) was layered on the obtained reinforced fiber layered body, a cavity was formed by sealing it with a flat mold and a bag material using a sealant, and they were put into an oven at 100°C. After the temperature of the reinforcing fiber layered body reached 100°C, the sealed cavity was reduced in pressure to a vacuum condition, and the matrix resin was injected only by a pressure difference from the atmospheric pressure while maintaining the temperature at 100°C. After the resin was impregnated, the temperature was elevated to 180°C while continuing to reduce the pressure, and it was left for 2 hours as it was to cure it and then demolded to obtain an FRP flat plate. With respect to the obtained FRP flat plate, non-impregnation was not caused and it had a good impregnation property.

### (Comparative Example 6)

### <Reinforcing Fiber Strand>

As the reinforcing fiber strand, the reinforcing fiber "Torayca " (registered trademark) T800SC, supplied by Toray Industries, Inc., which has been previously sized, having 24,000 reinforcing fiber filaments (N = 24K) was used.

### <Reinforcing fiber tape material>

Using a non-woven fabric sticking device (not shown), three reinforcing fiber strands each with a width of W = 8 mm and a number of filaments N [K] = 24 (N/W = 3) were drawn out in parallel so as to provide a gap of 0.2 mm therebetween, and at a condition where the non-woven fabric (material: polyamide) having a softening point temperature of 180°C was in contact with both surfaces thereof, by heating them at 180°C to restrain and integrate them with a laminator of the non-woven fabric sticking device, a reinforcing fiber tape material was obtained.

### <Reinforcing fiber Layered body/Fiber reinforced resin molded body>

A plurality of layered sheet base materials manufactured by the same method as in Example 3 were layered so that the areal weight of the reinforcing fiber layered body became 2.4 kg/m ², and were arranged is on the C-shaped mold, thereafter, a resin distribution medium (aluminum wire mesh) was layered on the obtained reinforced fiber layered body, a cavity was formed by sealing it with a flat mold and a bag material using a sealant, and the cavity was reduced in pressure to a vacuum condition. At this time, wrinkles were generated in a part of the reinforcing fiber layered body. Thereafter, the reinforcing fiber layered body was placed in an oven at 100°C, and after the temperature of the reinforcing fiber layered body reached 100°C, the matrix resin was injected only by the pressure difference from the atmospheric pressure while keeping the temperature at 100°C. After the resin was impregnated, the temperature was elevated to 180°C while continuing to reduce the pressure, and it was left for 2 hours as it was to cure it and then demolded to obtain an FRP flat plate. Non-impregnation occurred partially in the obtained FRP flat plate.

The results of Examples 3 and 4 and Comparative Example 6 are summarized in Table 2.

**[Table 2]**

| | Formability | Impregnation property |
|---|---|---|
| Example 3 | ○ | ○ |
| Example 4 | ○ | ○ |
| Comparative Example 6 | Δ | Δ |

| | | |
|---|---|---|
| "○": Wrinkle during forming is not present. "Δ": Wrinkle during forming occurs partially. "○": Non-impregnation is not present. "Δ": Non-impregnation occurs partially. | | |

### Industrial Applicability

Since the reinforcing fiber tape material obtained by the present invention and the reinforcing fiber layered body using the same are excellent in impregnation property of matrix resin, in particular, they are suitable for large members for aircraft, automobiles, ships, etc., and also for members for general industries such as windmill blades.

### Explanation of symbols

1: first resin material
2: second resin material
3: reinforcing fiber strand
4: third resin material
5: fourth resin material
11: width adjusting mechanism
12: heating unit (heater)
13: pressurizing unit (Nip roll )
14: cooling unit
15: winding device
16: belt
17: reinforcing fiber tape material
101, 102: reinforcing fiber tape material
300, 400: reinforcing fiber tape material
301, 401: reinforcing fiber strand
302, 402 fourth resin materials
303, 403: third resin materials
501, 502, 503: reinforcing fiber layered body

## Claims

1. A reinforcing fiber tape material (102) having a strand aggregate provided with one or a plurality of reinforcing fiber strands (3), used for resin injection molding,
wherein the tape material (102) is formed by being restrained and integrated with reinforcing fibers forming the reinforcing fiber strand (3) or/and the plurality of reinforcing fiber strands (3) with each other by a fourth resin material (5) arranged on at least one of surfaces of the strand aggregate and a third resin material (4) arranged on one of the surfaces via the fourth resin material (5) which is different in softening point from the fourth resin material (5), and the fourth resin material (5) and the third resin material (4) have matrix resin permeability,
wherein a heat-meltable fourth resin material (5) having a softening point of 40°C or higher and 200°C or lower is provided at a state of being solidified after being softened on both surfaces of the strand aggregate composed of reinforcing fiber strands each in which reinforcing fibers are aligned in parallel in one direction, and a third resin material (4) having a softening point higher than that of the fourth resin material (5) is adhered to one surface of the strand aggregate composed of the reinforcing fiber strands (3) via the fourth resin material (5),
**characterised in that** the softening point M3 [°C] of the third resin material and the softening point M4 [°C] of the fourth resin material satisfy the following equation: $M 3 > M 4 + 10 \left(°C\right) .$

2. The reinforcing fiber tape material according to claim 1, wherein the third resin material is in a form of a non-woven fabric and the form of the non-woven fabric is maintained.

3. The reinforcing fiber tape material according to claim 1 or 2, wherein the fourth resin material is in a form of particles.

4. The reinforcing fiber tape material according to any one of claims 1 to 3, wherein thicknesses T1 (µm) and T3 (µm) at both ends in a width direction of a cross section of the reinforcing fiber strand are both within a range of 50 to 200% with respect to a thickness T2 (µm) at a central portion of the reinforcing fiber strand.

5. The reinforcing fiber tape material according to any one of claims 1 to 4, wherein a number of filaments N [unit: K] and a width W [mm] of the reinforcing fiber strand satisfy 4.8 < N/W < 12.

6. The reinforcing fiber tape material according to any one of claims 1 to 5, wherein a plurality of the reinforcing fiber strands are aligned in parallel in one direction.

7. The reinforcing fiber tape material according to any one of claims 1 to 6, wherein a gap is provided between adjacent reinforcing fiber strands and is formed in parallel with a longitudinal direction of the reinforcing fiber strands.

## Patentansprüche

1. Verstärkungsfaserbandmaterial (102) mit einem Strangaggregat, das mit einem oder mehreren Verstärkungsfasersträngen (3) versehen ist, das zum Harzspritzgießen verwendet wird, wobei das Bandmaterial (102) gebildet wird, indem es durch ein viertes Harzmaterial (5), das auf mindestens einer der Oberflächen des Strangaggregats angeordnet ist, und ein drittes Harzmaterial (4), das auf einer der Oberflächen über das vierte Harzmaterial (5) angeordnet ist, das sich im Erweichungspunkt von dem vierten Harzmaterial (5) unterscheidet, zusammengehalten und mit Verstärkungsfasern, die den Verstärkungsfaserstrang (3) und/oder die mehreren Verstärkungsfaserstränge (3) bilden, integriert wird, und das vierte Harzmaterial (5) und das dritte Harzmaterial (4) eine Matrixharzdurchlässigkeit aufweisen,
wobei ein wärmeschmelzbares viertes Harzmaterial (5) mit einem Erweichungspunkt von 40 °C oder höher und 200 °C oder niedriger in einem Zustand bereitgestellt wird, in dem es nach dem Erweichen auf beiden Oberflächen des Strangaggregats, das aus Verstärkungsfasersträngen besteht, in denen jeweils Verstärkungsfasern parallel in einer Richtung ausgerichtet sind, verfestigt wird, und ein drittes Harzmaterial (4) mit einem Erweichungspunkt, der höher als der des vierten Harzmaterials (5) ist, über das vierte Harzmaterial (5) an eine Oberfläche des Strangaggregats, das aus den Verstärkungsfasersträngen (3) besteht, geklebt wird,
**dadurch gekennzeichnet, dass** der Erweichungspunkt M3 [°C] des dritten Harzmaterials und der Erweichungspunkt M4 [°C] des vierten Harzmaterials die folgende Gleichung erfüllen: $M 3 > M 4 + 10 \left(°C\right) .$

2. Verstärkungsfaserbandmaterial nach Anspruch 1, wobei das dritte Harzmaterial in Form eines Vliesstoffs vorliegt und die Form des Vliesstoffs beibehalten wird.

3. Verstärkungsfaserbandmaterial nach Anspruch 1 oder 2, wobei das vierte Harzmaterial in Form von Partikeln vorliegt.

4. Verstärkungsfaserbandmaterial nach einem der Ansprüche 1 bis 3, wobei die Dicken T1 (µm) und T3 (µm) an beiden Enden in einer Breitenrichtung eines Querschnitts des Verstärkungsfaserstrangs beide innerhalb eines Bereichs von 50 bis 200 % in Bezug auf eine Dicke T2 (µm) an einem zentralen Abschnitt des Verstärkungsfaserstrangs liegen.

5. Verstärkungsfaserbandmaterial nach einem der Ansprüche 1 bis 4, wobei eine Anzahl von Filamenten N [Einheit: K] und eine Breite W [mm] des Verstärkungsfaserstrangs 4,8 < N/W < 12 erfüllen.

6. Verstärkungsfaserbandmaterial nach einem der Ansprüche 1 bis 5, wobei mehrere der Verstärkungsfaserstränge in einer Richtung parallel ausgerichtet sind.

7. Verstärkungsfaserbandmaterial nach einem der Ansprüche 1 bis 6, wobei ein Spalt zwischen benachbarten Verstärkungsfasersträngen vorgesehen ist und parallel zu einer Längsrichtung der Verstärkungsfaserstränge ausgebildet ist.

## Revendications

1. Matériau de ruban de fibres de renforcement (102) ayant un agrégat de brins pourvu d'un ou d'une pluralité de brins de fibres de renforcement (3), utilisé pour le moulage par injection de résine, dans lequel le matériau de ruban (102) est formé en étant retenu et intégré avec des fibres de renforcement formant le brin de fibres de renforcement (3) ou/et la pluralité de brins de fibres de renforcement (3) les uns avec les autres par un quatrième matériau de résine (5) agencé sur au moins l'une des surfaces de l'agrégat de brins et un troisième matériau de résine (4) agencé sur l'une des surfaces via le quatrième matériau de résine (5) qui est différent en termes de point de ramollissement du quatrième matériau de résine (5), et le quatrième matériau de résine (5) et le troisième matériau de résine (4) ont une perméabilité de résine de matrice,
dans lequel un quatrième matériau de résine thermofusible (5) ayant un point de ramollissement de 40 °C ou plus et de 200 °C ou moins est prévu dans un état où il est solidifié après avoir été ramolli sur les deux surfaces de l'agrégat de brins composé de brins de fibres de renforcement, chacun dans lequel des fibres de renforcement sont alignées en parallèle dans une direction, et un troisième matériau de résine (4) ayant un point de ramollissement plus élevé que celui du quatrième matériau de résine (5) est collé à une surface de l'agrégat de brins composé des brins de fibres de renforcement (3) via le quatrième matériau de résine (5),
**caractérisé en ce que** le point de ramollissement M3 [°C] du troisième matériau de résine et le point de ramollissement M4 [°C] du quatrième matériau de résine satisfont l'équation suivante : $M 3 > M 4 + 10 \left(°C\right) .$

2. Matériau de ruban de fibres de renforcement selon la revendication 1, dans lequel le troisième matériau de résine est sous une forme d'un tissu non tissé et la forme du tissu non tissé est maintenue.

3. Matériau de ruban de fibres de renforcement selon la revendication 1 ou 2, dans lequel le quatrième matériau de résine est sous une forme de particules.

4. Matériau de ruban de fibres de renforcement selon l'une quelconque des revendications 1 à 3, dans lequel les épaisseurs T1 (µm) et T3 (µm) aux deux extrémités dans une direction de largeur d'une section transversale du toron de fibres de renforcement sont toutes deux dans une plage de 50 à 200 % par rapport à une épaisseur T2 (µm) au niveau d'une partie centrale du toron de fibres de renforcement.

5. Matériau de ruban de fibres de renforcement selon l'une quelconque des revendications 1 à 4, dans lequel un nombre de filaments N [unité : K] et une largeur W [mm] du toron de fibres de renforcement satisfont 4,8 < N/W < 12.

6. Matériau de ruban de fibres de renforcement selon l'une quelconque des revendications 1 à 5, dans lequel une pluralité des torons de fibres de renforcement sont alignés en parallèle dans une direction.

7. Matériau de ruban de fibres de renforcement selon l'une quelconque des revendications 1 à 6, dans lequel un espace est prévu entre des torons de fibres de renforcement adjacents et est formé en parallèle avec une direction longitudinale des torons de fibres de renforcement.
